# EUROPEAN PATENT SPECIFICATION

(11) **EP 0 956 801 B1**
(45) Date of publication and mention of the grant of the patent: **03.09.2003**
(21) Application number: 99114240.7
(22) Date of filing: 10.10.1996
(51) Int. Cl.: G01F 11/02, A47K 5/12

(54) **Pump with fragile seal membrane**
Pumpe mit zerbrechlicher Membranabdichtung
Pompe avec membrane d'étancheité fragile

(30) Priority: 10.10.1995 US 541370
(43) Date of publication of application: 17.11.1999
(62) Divisional of application: 96932418.5
(73) Proprietor: Ophardt, Heiner, Vineland, Ontario L0R 2C0 (CA)
(72) Inventor: Ophardt, Heiner, Vineland, Ontario L0R 2C0 (CA)
(74) Representative: Weisse, Jürgen, Dipl.-Phys.

(56) References cited:
- EP-A- 0 214 012
- WO-A-94/12791
- FR-A- 2 612 571
- GB-A- 923 527

## Description

### SCOPE OF THE INVENTION

This invention relates generally to a disposable plastic pump and, more particularly, to an inexpensive, preferably all plastic, disposable pump assembly for dispensing flowable materials.

### BACKGROUND OF THE INVENTION

Many pump assemblies are known for dispensing fluids, particularly, hand soap, from a reservoir. The simplest of these known pumps may include only two elements, a chamber forming body and a piston. Even the simplest of these pumps suffer the disadvantage, appreciated by the applicant, that they do not have a construction which permits the piston to be inserted into the chamber from the reservoir side of the chamber as may be advantageous amongst other things in permitting the chamber forming body to have an integral cover protecting the piston from contamination prior to use.

Known pump assemblies suffer the disadvantage of being difficult to maintain the reservoir and pump free from contamination prior to use.

WO-A-9 412 791 discloses a pump for dispensing fluid from a reservoir. The pump comprises a piston-chamber having an inner cylindrical chamber and an outer cylindrical chamber. The inner chamber and the outer chamber are coaxial with the outer end of the inner chamber opening into the inner end of the outer chamber, the inner end of the inner chamber being in fluid communication with the reservoir. A piston is received in the piston-chamber and axially slidable inwardly and outwardly therein. The piston is generally cylindrical in cross-section and has a central axially extending hollow stem having a central passageway closed at an inner end and having an outlet proximate an outer end. An inner circular flexing disc extends radially outwardly from the stem proximate the inner end to proximate the chamber wall of the inner chamber circumferentially thereabout. An outer circular flexing disc extends radially outwards from the stem to proximate the inner wall of the outer chamber circumferentially thereabout. A circular sealing disc extends radially outwardly from the stem to proximate the chamber wall of the outer chamber circumferentially thereabout. An inlet is located on the stem between the outer flexing disc and the sealing disc in communication with the passageway. The piston is slidably received in the piston-chamber for reciprocal axial inward and outward movement therein with the inner flexing disc in the inner chamber and the outer flexing disc and sealing disc in the outer chamber. The inner flexing disc substantially prevents fluid flow in the inner chamber past the inner flexing disc in an inward direction. The outer flexing disc substantially preventing fluid flow in the outer chamber past the outer flexing disc in an inward direction. The sealing disc substantially prevents fluid flow in the outer chamber past the sealing disc in an outward direction. The inner flexing disc is adapted to elastically deform away from the chamber wall of the inner chamber to permit fluid flow in the inner chamber past the inner flexing disc in an outward direction. The outer flexing disc is adapted to elastically deform away from the chamber wall of the outer chamber to permit fluid flow in the outer chamber past the outer flexing disc in an outward direction. The diameter of the inner chamber is less than the diameter of the outer chamber.

GB-A-923 527 and FR-A-2 612 571 disclose fluid pumps comprising a piston chamber having an inner chamber and an outer chamber, the inner chamber and the outer chamber being coaxial with an outer end of the inner chamber opening into the inner end of the outer chamber. The inner end of the inner chamber is in fluid communication with a source of fluid. A piston being is received in the piston chamber axially slidable inwardly and outwardly whereby inward and outward reciprocal sliding of the piston forming element in the piston chamber forming member pumps fluid through the piston chamber from the inner end to out the outer end. The inner end is closed by a fragible membrane which, when unbroken, separates the inner end from fluid communication with the source of fluid and, when broken, places the inner end in fluid communication with the source of fluid. A cutting element is carried on the piston and extends axially inwardly towards the inner end of the piston chamber. The piston is located in the piston chamber in an initial position with the cutting element in the piston chamber spaced from the membrane towards the outer end such that on axial sliding of the piston towards the membrane, the cutting element engages the membrane and breaks the membrane.

### SUMMARY OF THE INVENTION

To at least partially overcome these disadvantages of known pumps, the present invention provides a piston with a cutting member to pierce a membrane to provide communication with a fluid reservoir.

Another object is to provide a unique configuration for an inexpensive disposable piston for a disposable pump which can be injection molded, as a unitary element entirely from plastic yet incorporate one or more one-way valves.

Another object is to provide a disposable plastic pump assembly formed entirely from two unitary plastic elements without any metal parts.

Another object is to provide a construction which maintains the piston in a sealed contamination-free environment.

The present invention provides an inexpensive, easy to assemble, disposable pump for dispensing liquids, from a reservoir, preferably a disposable reservoir.

The pump comprises two basic elements: a chamber forming body and a piston. The chamber is a stepped chamber with an inner cylindrical chamber of a different, preferably greater, diameter compared to an outer cylindrical chamber.

The piston is formed to be slidably received in the chamber and comprises a stem. Two axially spaced flexing elements are provided on the stem with the flexing elements and the stepped cylinder configuration providing a first one-way valve permitting fluid flow only outwardly past the flexing elements. A sealing element which forms a seal with the chamber to prevent flow outwardly past the sealing element is located on the stem outward from the flexing elements. A channel is provided from an inlet on the piston between the outwardmost flexing element and the sealing element to permit fluid flow to an outlet outward of the sealing means. Liquids are drawn from the reservoir by the outward and inward movement of the piston. Fluids are first drawn from the reservoir, past the flexing elements and into the chamber. Since the flexing elements prevent fluid from flowing back into the reservoir yet bend to allow liquid to pass outwardly therepast, with subsequent movement of the piston, liquid is pumped out of the chamber via the channel.

After exhaustion of the liquids contained in the reservoir, the reservoir may be replaced, preferably together with a new pump assembly attached. Preferably, both the reservoir and the chamber forming member are formed entirely of plastic so as to permit easy recycling of the plastic parts.

Each of both the piston and the chamber forming body is provided with a unique combination of features which permits it to be injection molded from plastic as a unitary element.

The chamber forming body may be formed as an integral, unitary piece of plastic with an integral but fragible cover closing and sealing its outer opening. By sealing the inner opening of the chambers, the piston may be retained in a sealed environment against contamination. Where the inner opening of the chamber is sealed and/or separated from a reservoir of material to be pumped by a thin membrane, the piston carries a cutting member to pierce the membrane on the first inward stroke of the piston.

The use of a configuration with an inner chamber being of a diameter greater than the diameter of the outer chamber and with an integral cover closing the outer chamber being of reduced diameter compared to the outer chamber, facilitates manufacture by injection molding.

The fluid pump according to the invention can be of the type providing a pump for dispensing fluid from a reservoir comprising:
piston-chamber forming member having an inner chamber and an outer chamber, the inner chamber and outer chamber each having a diameter, a chamber wall, an inner end and an outer end,
the diameter of the inner chamber being different, preferably greater than the diameter of the outer chamber,
the inner chamber and outer chamber being coaxial with the outer end of the inner chamber opening into the inner end of the outer chamber,
the inner end of the inner chamber in fluid communication with the reservoir,
a piston forming element received in the piston-chamber forming member axially slidable inwardly and outwardly therein,
said piston forming element having an axially extending hollow stem having a central passageway closed at an inner end and having an outlet proximate an outer end,
an inner flexing disc on the stem proximate the inner end and extending radially outwardly from the stem to proximate the chamber wall of the inner chamber circumferentially thereabout,
an outer flexing disc on the stem spaced axially outwardly from the inner flexing disc and extending radially outwardly from the stem to proximate the chamber wall of the outer chamber circumferentially thereabout,
a sealing disc on the stem spaced axially outwardly from the outer flexing disc and extending radially outwardly from the stem to proximate the chamber wall of the outer chamber circumferentially thereabout,
an inlet located on the stem between the outer flexing disc and the sealing disc in communication with the passageway,
the piston forming element slidably received in the piston-chamber forming member for reciprocal axial inward and outward movement therein with the inner flexing disc in the inner chamber and the outer flexing disc and sealing disc in the outer chamber,
the inner flexing disc substantially preventing fluid flow in the inner chamber past the inner flexing disc in an inward direction,
the outer flexing disc substantially preventing fluid flow in the outer chamber past the outer flexing disc in an inward direction,
the sealing disc substantially preventing fluid flow in the outer chamber past the sealing disc in an outward direction,
the inner flexing disc elastically deforming away from the chamber wall of the inner chamber to permit fluid flow in the inner chamber past the inner flexing disc in an outward direction,
the outer flexing disc elastically deforming away from the chamber wall of the outer chamber to permit fluid flow in the outer chamber past the outer flexing disc in an outward direction.

The present invention provides a pump including a removable cover member closing the outer end of the outer chamber and preferably formed as an integral part of the piston chamber forming member.

The present invention further provides a pump in which a cutting element is carried on the piston-forming element for rupturing a membrane sealing the inner end of the inner chamber.

### BRIEF DESCRIPTION OF THE DRAWINGS

Figure 1 is a partial cross-sectional side view of a liquid dispenser with the piston in a fully withdrawn position;
Figure 2 is a partial cross-sectional side view of the dispenser of Figure 1 but with the piston in a fully retracted position;
Figure 3 is a partial cross-sectional side view of a liquid dispenser in accordance with the present invention with the piston in a fully withdrawn position;
Figure 4 is a partial cross-sectional side view of another liquid dispenser with the piston in a fully withdrawn position;
Figure 5 is a partial cross-sectional side view of the dispenser of Figure 4 but with the piston in a fully retracted position;
Figure 6 is a partial cross-sectional side view of a further liquid dispenser with the piston in a fully retracted position and a closure cap in place; and
Figure 7 is a cross-sectional view of Figure 6 along section line 7-7'.

### DETAILED DESCRIPTION OF THE DRAWINGS

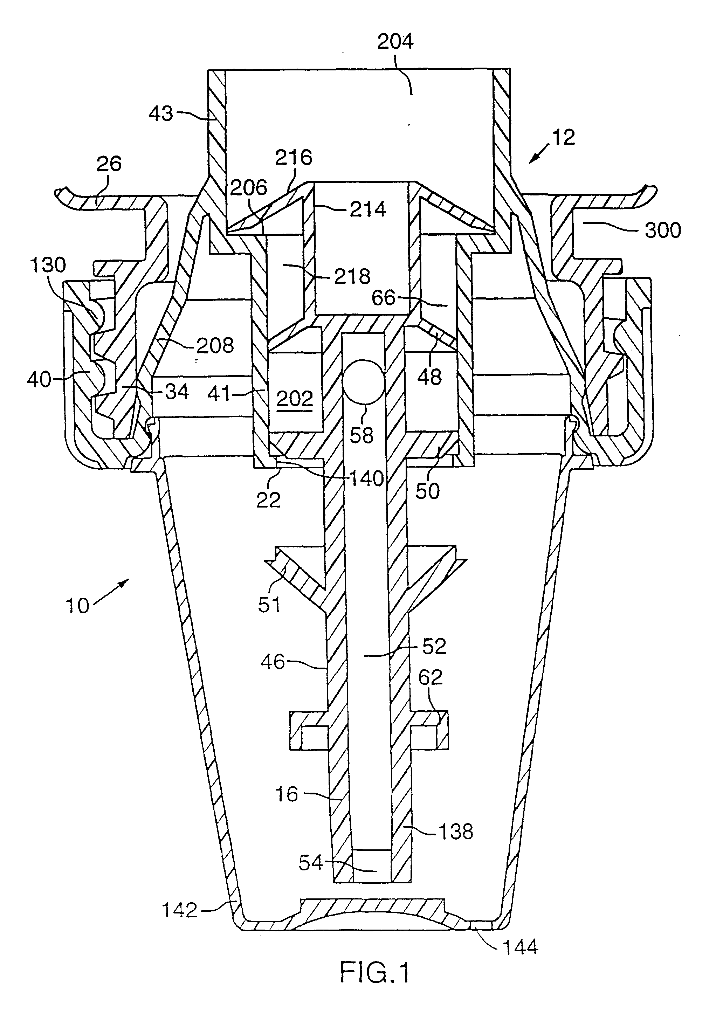

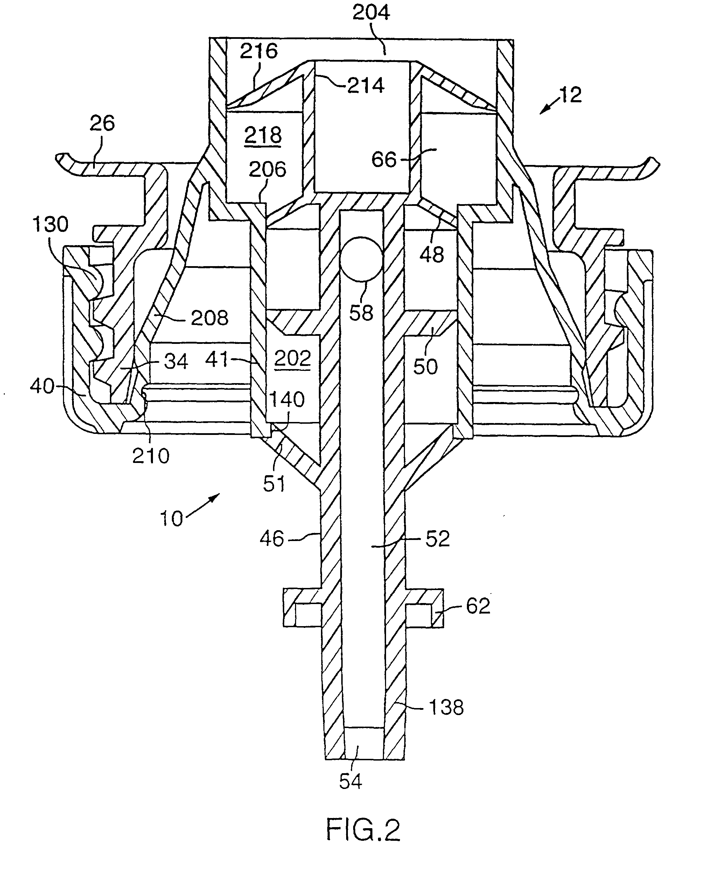

The embodiments of Figures 1, 2 and 4-7 represent background art being useful for understanding the invention. Reference is made first to Figures 1 and 2 which show a pump assembly generally indicated as 10. Pump assembly 10 comprises two elements, a piston-chamber forming body 12 and a piston 16. A separate removable cover 142 is shown coupled to the pump assembly.

Body 12 has a stepped chamber comprising a cylindrical inner chamber 204 and a cylindrical outer chamber 202. Piston 16 is axially slidably received in the chamber for reciprocal sliding movement inwardly and outwardly of an open end 22 of the chamber. Body 12 is shown secured onto a threaded neck 34 of a plastic fluid reservoir 26 only partially shown. With the pump assembly 10 coupled to reservoir 26, reciprocal movement of piston 16 will pump fluid from reservoir 26 through piston 16.

Body 12 is generally cylindrical in cross-section and symmetrical about its central axis. Body 12 has an outer cylindrical portion 41 forming the outer chamber 202 and an inner cylindrical portion 43 forming the inner cylindrical chamber 204 with a radially extending shoulder 206 therebetween. The inner chamber 204 is of a diameter greater than the diameter of the outer cylindrical chamber 202.

Each chamber has a cylindrical chamber wall, an inner end and an outer end. The outer chamber 202 and inner chamber 204 are coaxial in the sense of being disposed about the same central axis. The outer and inner chambers are axially adjacent each other with the outer end of the inner chamber opening into the inner end of the outer chamber. The annular shoulder 206 closes the inner end of outer chamber 202 about the outer end of the inner chamber.

Body 12 is secured to a container 26, which may be a collapsible or a non-collapsible container, by internal threads 130 on an outer cylindrical portion 40 engaging the threaded neck 34 of container 26. The chambers 202 and 204 are defined inside cylindrical portions 41 and 43 with an annular wall 208 connecting the outer cylindrical portion 40 to the inner cylindrical portion 41. The wall 208 has circumferential grooves 210 adapted to receive a removable cover 142 in a snap fit forming an annular seal thereabout.

Piston 16 is generally cylindrical in cross-section and adapted to be slidably received in the chamber. Piston 16 is a unitary element formed entirely of plastic, preferably by injection molding. Piston 16 has a central hollow stem 46 extending along the central longitudinal axis of the piston 16.

The stem 46 includes an inner cylindrical extension 214 which carries at its inner end an annular inner flexing disc 216. The inner extension 214 and inner flexing disc are adapted to be received within inner chamber 204. Inner flexing disc 216 is circular and extends radially outwardly from stem extension 214 with an elastically deformable edge portion engaging the chamber wall of the inner chamber circumferentially thereabout.

An annular outer flexing disc 48 is carried on the stem 46 extending radially therefrom within the outer chamber 202. Outer flexing disc 48 is circular and extends radially outwardly from the stem 46 with an elastically deformable edge portion engaging the chamber wall of the outer chamber 202 circumferentially thereabout.

A circular sealing disc 50 is located on the stem 46 spaced axially outwardly from the flexing disc 48. The sealing disc 50 extends radially outward from the stem 46 to circumferentially engage the chamber wall of the outer chamber 202, preferably to form a substantially fluid impermeable seal therebetween. Sealing disc 50 is formed sufficiently rigid so as to resist deformation, maintaining a substantially fluid impermeable seal with the chamber wall on sliding the piston 16 in and out of the chamber.

Piston stem 46 has a central hollow passage 52 extending along the axis of the piston 16 from an inner end located in the stem 46 between the flexing disc 48 and the sealing disc 50, to an outlet 54 at the outer end of the piston 16. A channel 56 passes from inlets 58 located on either side of the stem 46 between the flexing disc 48 and the sealing disc 50, radially inward through the piston 16 to communicate with central passage 52. The channel 56 and central passage 52 permit fluid communication through the piston 16, past the sealing disc 50, between the inlets 58 and the outlet 54.

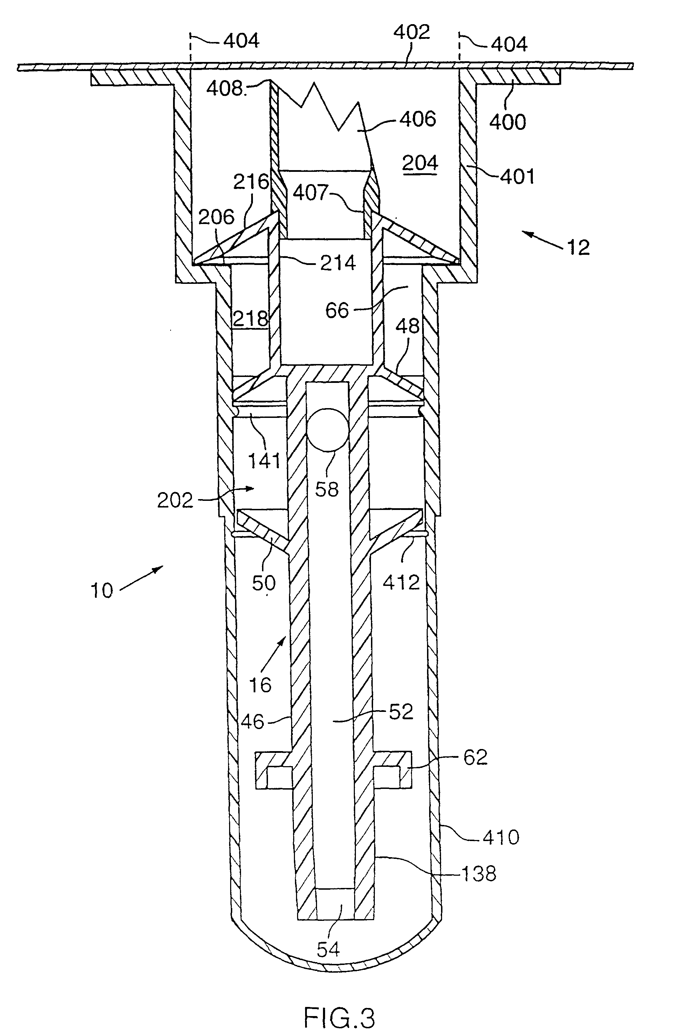

As best shown in Figures 2 and 3, an outer circular engagement flange 62 is provided on the outermost end of the stem 46 which extends radially outwardly from the outlet 54. Flange 62 may be engaged by an actuating device (not shown) in order to move the piston 16 in and out of the body 12.

Stem 46 extends outwardly as a relatively narrow tube 138 suitable for dispensing fluid.

Body 12 is provided at the open end 22 of outer chamber 202 with an annular rim 140 which extends radially inwardly from the cylindrical walls of the chamber a small extent and presents an axially inwardly directed annular shoulder. This annular rim 140 serves as a stop against which sealing disc 50 abuts to limit axial outward movement of piston 16.

The inner flexing disc 216 interacts with inner chamber 204 in the same manner that outer flexing disc 48 interacts with outer chamber 202. Each substantially prevents fluid flow in their respective chamber past the flexing disc in an inward direction. Each permits fluid flow in their respective chamber past the flexing disc in an outward direction by elastically deforming away from their respective chamber wall.

The inner flexing disc 216 together with the stepped, two-diameter cylinder configuration of chamber 18, in effect, provide an inner one-way valve structure.

Operation of the pump assembly 10 is now described with reference to Figure 1 showing piston 16 in a fully outward, withdrawn position and Figure 2 showing piston 16 in a fully inward, retracted position, between which positions the piston 16 is reciprocated in pumping. As is known to persons skilled in the art, the volume 218 of fluid in the chamber between inner flexing disc 216 and outer flexing disc 48 varies with axial movement of piston 16. In Figure 1, this volume 218 is a minimum in that the inner flexing disc 216 is axially located farthest outwardly in the larger diameter inner chamber 204. In Figure 2, this volume 218 is a maximum in that the inner flexing disc 216 is axially located farthest inwardly in inner chamber 204.

In piston 16 moving inwardly from the withdrawn position of Figure 1 to the retracted position of Figure 2, the volume for the fluid between the two flexing discs increases, placing the fluid therebetween under reduced pressure in that outer flexing disc 48 acts as a one-way valve to prevent flow of fluid inwardly past it in outer chamber 204. As a result of this decreased pressure, inner flexing disc 216 deflects radially inwardly permitting flow of fluid outwardly past it in inner chamber 204.

In piston 16 moving outwardly from the retracted position of Figure 2 to the withdrawn position of Figure 1, the volume 218 for the fluid between the two flexing discs decreases placing such trapped fluid under increased pressure in that inner flexing disc 216 acts as a one-way valve to prevent flow of fluid inwardly past it in inner chamber 204. As a result of this increased pressure, outer flexing disc 48 deflects radially inwardly permitting flow of fluid outwardly past it in outer chamber 202 and, subsequently, via inlets 58, channel 56 and passageway 52, out of outlet 54.

As seen in Figure 1, annular rim 140 is provided to engage sealing disc 50 and limit full outward movement of piston 16 in normal pumping operation. Engagement of annular shoulder 206 by inner flexing disc 216 may also limit full outward movement of piston 16 in normal pumping operation.

Each of the flexing discs 48 and 216 substantially prevent flow inwardly therepast. Each is shown as formed as a thin, resilient disc angled outwardly as it extends radially from the stem. Each has an elastically deformable edge portion near the chamber wall. When not deformed, each flexing disc abuts the chamber wall to form a substantially fluid impermeable seal. When deformed, as by its edge portion being bent away from the wall, fluid may flow outwardly past the disc. Each disc is deformed when the pressure differential across it, that is, the difference between the pressure on the inner side and pressure on the outer side, is greater than a maximum pressure differential which the disc can withstand without deflecting. When the pressure differential is greater than this maximum pressure differential, the disc deforms and fluid flows past. When the pressure differential reduces to less than this maximum pressure differential, the disc returns to its original shape substantially forming a seal with the chamber wall.

Figures 1 and 2 show one of a plurality of webs 66 provided on inner extension 214 to slidably engage the chamber wall of outer chamber 202 and assist in centering and axially aligning piston 16 in chambers 202 and 204. Such webs 66 are not necessary but may advantageously be provided. Webs 66 have been shown as axially extending radial flanges, however, many other forms of such locating members may be provided, for example, as a disc similar to disc 50 but having substantial openings therethrough or discontinuities therein.

The piston 16 is insertable into the chambers from above as seen in Figures 1 and 2. To accommodate insertion of the piston 16 in this manner, the engagement flange 62 is shown of a diameter less than the diameter of the open end 22 of the outer chamber 202. Withdrawal of the piston 16 from the chambers in a downward, outward direction is prevented by inner flexing disc 216 engaging annular shoulder 206.

It is preferred but not necessary that a mechanism be provided to prevent withdrawal of the piston 16 from the chambers in normal use in movement in an upward, inward direction. A stop flange 51 has been provided on piston 16 which will engage the open end 22 of the outer chamber 202 to stop further upward, inward movement. Stop flange 51 is sufficiently flexible that it will, on insertion flex inwardly to pass through open end 22 on downward movement on initial insertion. Many other configurations of stop devices may be utilized.

In operation of the pump assembly of Figures 1 and 2, fluid is drawn out of the container 26 and into the chambers in the inward return stroke of the piston 16, that is, on moving from the position of Figure 1 to that of Figure 2, and fluid is discharged from the chambers to exit the outlet 54 in the outward withdrawal stroke of the piston 16, that is, on moving from the position of Figure 2 to that of Figure 1. Cycling of the piston 16 results in withdrawal of fluid from the container and pumping of fluid out of the outlet 54 due to the inner chamber 204 and outer chamber 202 having different diameters.

In the context of Figure 1, on the piston 16 moving inwardly (upwardly as shown), fluid will flow past inner flexing disc 216 to between inner flexing disc 216 and outer flexing disc 48. In the context of Figure 2, on the piston 16 moving outwardly (downwardly as shown), fluid will be forced from between discs 216 and 48 outwardly past outer flexing disc 48 to exit via inlets 58 and passage 52.

Reference is now made to Figure 3 which shows a pump assembly having a chamber and piston similar to that of Figures 1 and 2 and having some additional features according to the invention.

Firstly, in Figures 1 and 2, the chamber forming body 12 is part of a structure adapted to be screwed onto the top of a threaded opening to a container. In contrast in Figure 3, the chamber forming body 12 is adapted by reason of radial flange 400 to be secured as by heat welding to a thin wall 402, preferably of plastic, for a container such as a plastic bag. This flange 400 is carried on the inner end of the side wall 401 forming inner chamber 204.

Wall 402 may be provided with an opening coincident with the innermost end of inner chamber 204 as indicated by dotted lines 404. As shown, however, the wall 402 preferably, sealably encloses the innermost end of inner chamber 204 and, in effect, comprises a thin, cuttable or fragible membrane. To cut an opening through the wall 402 or, otherwise, rupture the wall, at the time of first use of the pump assembly 10, the piston 16 is provided rearward of the inner flexing disc 216 with a cutting member 406.

The cutting member 406 is shown as formed as a separate plastic element which is adapted to securely engage on the innermost end of the piston 16 as by an outer cylindrical portion 407 of the cutting member being received in a friction fit inside the cylindrical innermost end of the piston 16. The cutting member 406 has sharp spikes 408 which, when the piston 16 is initially moved inwardly, will engage and cut through wall 402 to permit fluid to be pumped from the container. The cutting member is shown as a separate element to the piston 16 as this can be advantageous to provide the cutting member of a material which will have sufficiently sharp and rigid spikes to cut through wall 402. For example, the piston 16 may preferably comprise a more flexible plastic to assist in forming seals with the chambers as, for example, of low density polyethylene whereas the cutting member may comprise a stiffer, more brittle plastic as, for example, a high density polyethylene. The cutting member could, however, be formed as an integral element to the piston 16 and of the same material.

Secondly, in Figure 3, the chamber forming body 12 is provided with a cap 410 which extends from the outer end of the outer chamber 202 to totally enclose the stem 46 of the piston 16. This cap 410 is shown with an annular groove 412 about its side wall 412 to provide a weakened portion to the side wall such that the cap 410, while sealably closing the outer chamber 202, is fragible and may be broken off for use and engagement of the piston. Figure 3, thus, illustrates a unitary plastic element comprising the chamber forming body 12 which can be applied in a sealed relation to a container to retain the piston 16 therein, preferably, in a sealed condition against contamination.

While cap 410 is shown as integral to the chamber forming body 12 and fragible, it is to be appreciated that the cap may be provided as a separate removable element, similar to that shown in Figure 1, for example.

The pump assembly, with a bag as shown in Figure 3, is useful for fluids of all kinds, but is especially useful where a sealed or sterile condition is required, such as for food products like ketchup, mustard, milk and the like, and medicines and other products such as soap and the like whose life reduces on exposure to air.

Thirdly, in Figure 3, the sealing disc 50 is shown to have a preferred configuration. In all embodiments, the sealing disc 50 serves to prevent fluid flow in the outer chamber past the sealing disc 50 in an outward direction. That is, the sealing disc 50 serves to close the outermost end of outer chamber 202 such that fluid directed into the outer chamber 202 past flexing disc 48 will flow out inlets 58 and passage 52 which is typically open to the atmosphere. In Figure 3, sealing disc 50 has a configuration substantially the same as that of flexing disc 48, however, with the sealing disc 50 comprising a conical flange on the piston 16 which extends inwardly. Since inlets 58 and passage 52 vent the space between sealing disc 50 and flexing disc 48 to atmosphere, there are no practical problems caused insofar as pressure differentials will not arise across sealing disc 50 which would tend to let air pass inwardly past sealing disc 50.

Providing sealing disc 50 with a conical, more flexible configuration is advantageous to facilitate manufacture with lower tolerances to be required for a proper seal between the outer chamber and the sealing disc 50 due to the increased flexibility of sealing disc 50.

Fourthly, in Figure 3, a different mechanism is provided to stop movement of the piston in an inward, upward direction. Whereas in Figures 1 and 2, inward movement was stopped by stop flange 51, in Figure 3, a radially extending annular shoulder-forming flange 141 is provided on the side wall 41 of the outer chamber 202 which is to be engaged by sealing disc 50 to stop inward movement of the piston under normal operating conditions. Shoulder-forming flange 141 is sized such that the stop flange 51 may flex to pass therepast on initial insertion of the piston 16 into the chambers.

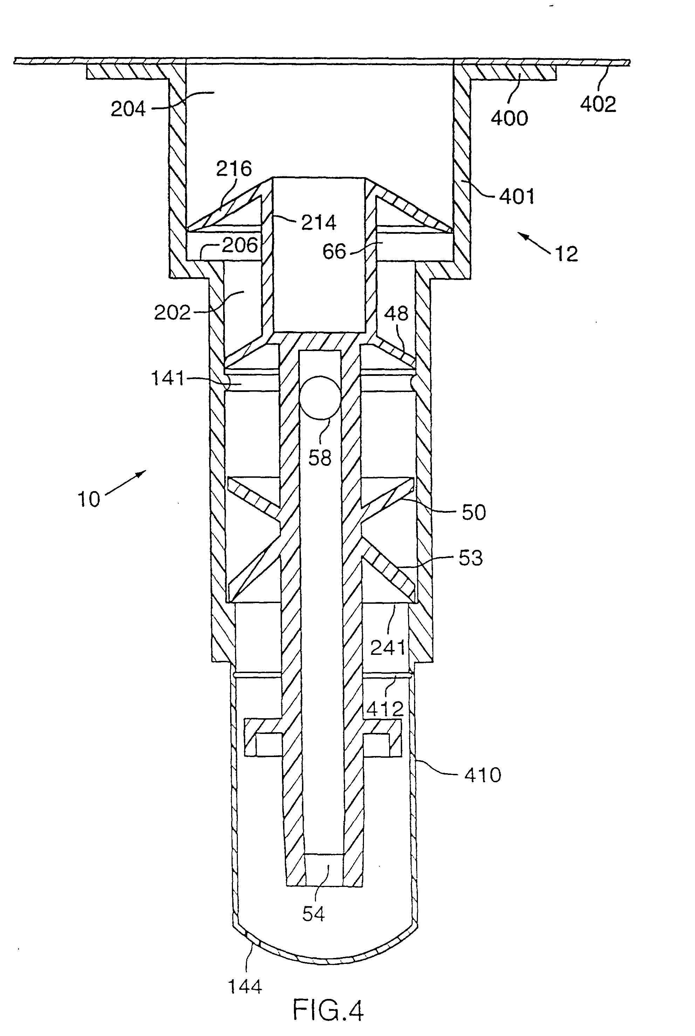

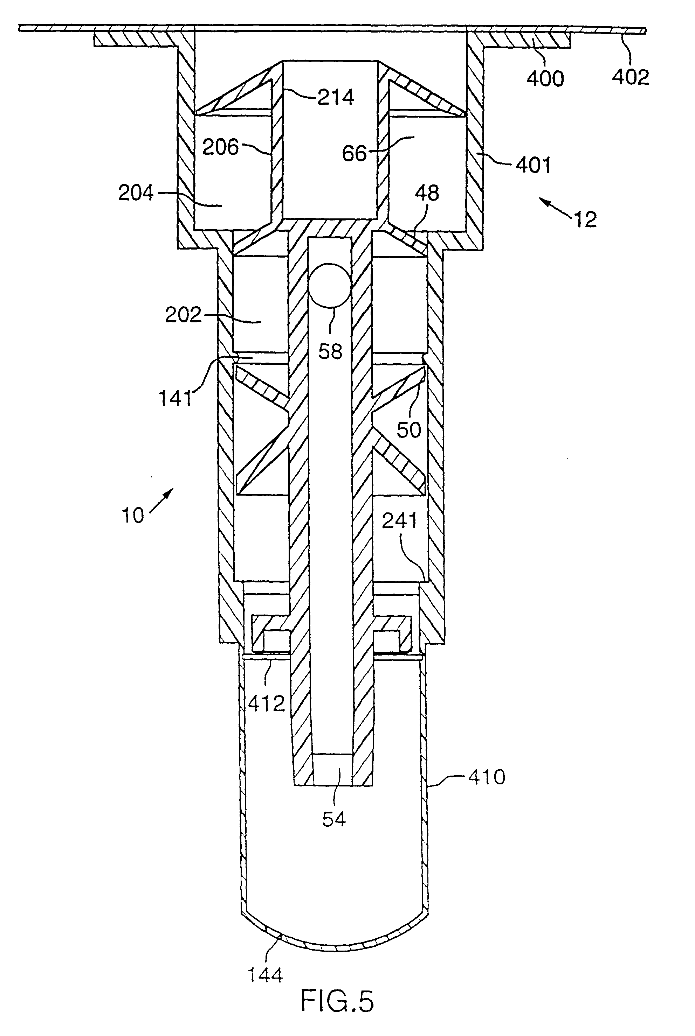

Reference is made to Figures 4 and 5 showing another embodiment of a dispenser. In Figures 4 and 5, the same reference numerals are used to refer to similar elements as in the other figures. Figures 4 and 5 are of the same pump assembly. Figure 4 shows a fully withdrawn position. Figure 5 shows a fully retracted position.

The embodiment of Figures 4 and 5 is similar to that in Figure 3. One notable difference is that a stopping disc 53 has been provided on the piston 16 cooperating with shoulder 241 on outer chamber to limit outward (downward) movement of the piston at a preferred location as shown in Figure 4 such that sealing disc 216 is not sealably engaged on shoulder 206. In this position of Figure 4 and in that an opening 144 is provided in cap 140, by applying a suitable vacuum to opening 144, gas or fluid may be drawn from the container past both flexible discs 216 and 48 and out inlets 58 and nozzle 54 to opening 144 as may be advantageous to remove air from the reservoir. By selecting appropriate vacuum pressures, air may be removed but the vacuum may be set to be too low to draw a higher viscosity fluid past the flexible discs 216 and 48.

Flange 141 is, preferably, gently sloped on its inner surface to assist stop flange 53 to forceably move therepast on initial insertion. Flange 141 is sufficiently axially spaced from flexing disc 48 to permit the flexing disc to let gas/fluid to pass therepast.

Figure 5, which is identical to Figure 4 but shows the piston in a fully retracted position, shows inward movement limited by sealing disc 50 engaging shoulder-forming flange 141. It is to be appreciated that sealing disc 50 and stopping disc 53 each can serve sealing and stopping functions.

Opening 144 need not be provided in cap 410 if it is preferred to keep the piston in a sealed and/or sterile condition. A removable closure plug may be provided for opening 144 if desired or, alternatively, a one way valve could be provided across opening 144.

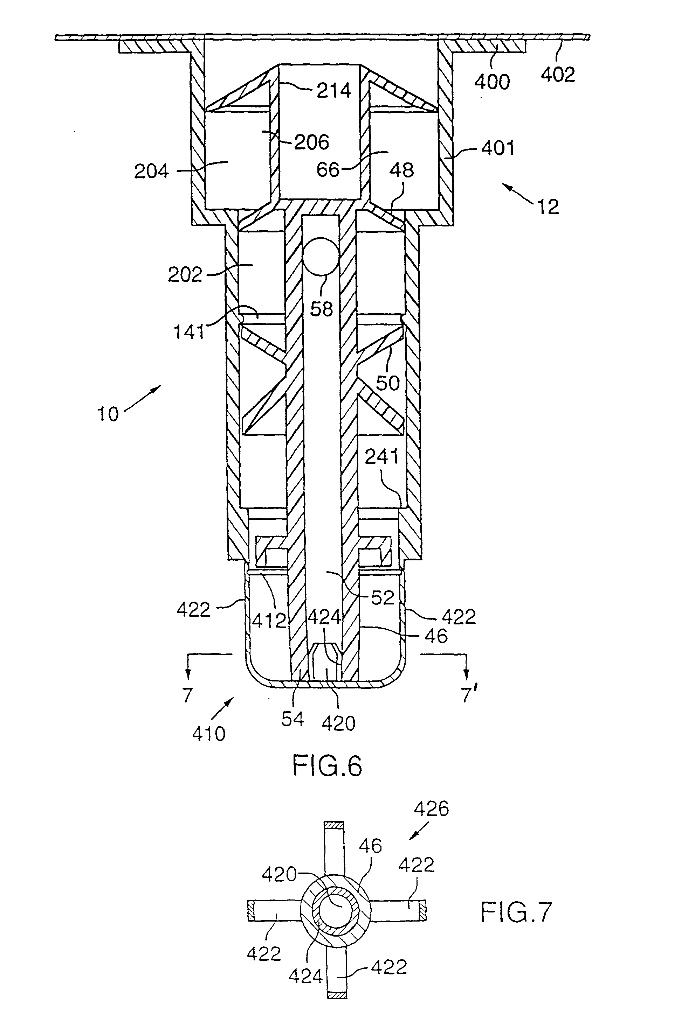

Reference is made to Figures 6 and 7. The pump of Figure 6 is identical to that shown in Figures 4 and 5 but for the provision of a modified cap 410 which carries a plug 420 to be received in the outlet 54 and seal the outlet.

As seen in Figure 7, the cap 410, rather than totally enclose the outer end of the outer chamber 202, has its side walls substantially removed outward of groove 412 such that a number of arms 422, four as shown, extend downwardly from groove 412 as shown to support the plug 420 centrally thereon. Each arm 422 is preferably formed integrally with the body 12. Having but a number of arms 422 renders manufacture of the body 12 easier as by injection molding, preferably as an integral part of body 12 and renders the cap 410 easier to break off for use since merely the arms 422 need to be broken at the groove 412 rather than the entire circumference of the cap 410 as was the case with the caps of Figures 3 to 5.

Plug 420 is shown to have a generally cylindrical wall 424 sized to be received within the passageway 52 in sealing relation.

While not necessary, the cap 442 is preferably sized such that the outlet 54 is seated and sealed by the plug 420 when the piston 16 is in the fully withdrawn position as with sealing disc 50 engaged on the outward side of flange 144. This prevents any movement of piston 16 until the cap 410 is removed.

While Figure 7 shows the cap 410 as having openings 426 between its arms 422, such openings are not necessary and the cap 410 could comprise a cap 410 which encloses the open outer end of the outer chamber as in the manner of the cap 410 in Figures 3 to 5 but with a plug 420 provided on the cap.

The cap 410 is preferably integrally formed with body 12, however, this is not necessary and a removable cap which may be secured to the body 12 as in the manner shown in Figure 1, could be provided with a plug such as plug 420 in Figures 6 and 7 and with or without openings 426.

A cap with a plug similar to that shown in Figure 6 and with or without openings 426 may be provided for sealing and/or enclosing the outer open ends of pumps having configurations other than configurations with an inner chamber having a diameter greater than that of the diameter of the outer chamber. Such a cap with a plug may readily be utilized in pumps having a stepped chamber with an inner chamber having a diameter greater than that of the diameter of the outer chamber and with other pumps having a nozzle which extends or is accessible from an opening of the piston receiving chamber. The cap may be formed integrally with the chamber forming body of such pumps or be manufactured as a separate element. When manufactured as a separate element to assist in rendering the cap tamper-proof, the cap may be welded, bonded or otherwise glued onto the body such that removal requires visibly breaking fragible portions or separate safety bands or the like. Preferably, the cap and plug engage the piston so as to prevent the piston from movement having regard to the configuration of the chamber forming body until the cap is removed.

While Figure 3 shows the cutting member 406 as preferably provided in an embodiment where the inner chamber 204 has a diameter larger than that of the outer chamber 206, it is to be appreciated that a similar cutting member 406, as in the cannula form shown, could be provided on the innermost end of other pistons as where the inner chamber has the lesser diameter than the diameter of an outer chamber.

The pumps illustrated in Figures 1 to 5 are for use in dispensers with the dispensers to reciprocate the piston 16 relative the body 12. In the context of Figures 1 and 2, the container 26 is provided with a radially extending groove 300 which may be used to receive a horizontal plate with a U-shaped slot. A separate activating device may engage engagement flange 62 and be spring biased so as to bias the piston to return, for example, to the position shown in Figure 1 when engaged by the activating device to the position of Figure 2.

Preferably, not only the pump 10 but also the reservoir 26 may be made entirely of recyclable plastic material which may easily be recycled without the need for disassembly prior to cutting and shredding.

Although the disclosure describes and illustrates a preferred embodiment of the invention (see Figure 3), it is to be understood that the invention is not limited to these particular embodiments. Many variations and modifications are possible within the scope of the claims.

## Claims

1. A fluid pump (10) for dispensing fluid from a reservoir (26), comprising
a piston chamber forming member (12) having an inner end and an outer end,
the piston chamber forming member (12) having an inner chamber (204) and an outer chamber (202),
the inner chamber (204) and the outer chamber (202) being coaxial, with the outer end of the inner chamber (204) opening into the inner end of the outer chamber (202),
the inner end of the inner chamber (204) being in fluid communication with the reservoir (26),
a piston forming element (16) being received in the piston chamber forming member (12) axially slidable inwardly and outwardly whereby inward and outward reciprocal sliding of the piston forming element (16) in the piston chamber forming member (12) pumps fluid through the piston chamber forming member (12) from the inner end to the outer end,
the inner end closed by a fragible membrane (402) which, when unbroken, separates the inner end from fluid communication with the reservoir (26) of fluid and, when broken, places the inner end in fluid communication with the reservoir (26) of fluid,
a cutting element (406) carried on the piston forming element (16) and extending axially inwardly towards the inner end of the piston chamber forming member (12),
the piston forming element (16) located in the piston chamber forming member (12) in an initial position with the cutting element (406) in the piston chamber forming member (12) spaced from the membrane (402) towards the outer end such that on axial sliding of the piston forming element (16) towards the membrane (402), the cutting element (406) engages the membrane (402) and breaks the membrane (402),
**characterized by**
a removable cover member (410) across the outer end of the piston chamber forming member (12) confining the piston forming element (16) within the piston chamber forming member (12) against being accessed for movement within the piston chamber forming member (12) until the cover member (410) is removed.

2. A pump as claimed in claim 1 wherein the removable cover member (410) substantially sealing the outer end of the piston chamber forming member (12) whereby the piston forming element (16) is maintained substantially sealed against contamination within the piston chamber forming member (12).

3. A pump as claimed in claim 2 wherein the cover member (410) comprises an integral part of the piston chamber forming member (12) and is removable therefrom by breaking of a fragible junction (412) joining the cover member thereto.

4. A pump as claimed in claim 1, 2 or 3 wherein the piston chamber forming member (12) includes a radially outwardly extending flange (400) about the inner end adapted for bonding to said membrane (402).

5. A pump as claimed in any preceding claim wherein the piston forming element (16) having an axially extending hollow stem (46) which extends out of said outer end of the piston chamber forming member (12),
the stem (46) having a central passageway (52) ending at an outlet (54) out of which fluid is pumped by reciprocal movement of the piston forming element (16), and
a plug member (420) removably received in the outlet (54) to sealably close the passageway (52).

6. A pump as claimed in claim 5 wherein said plug member (420) comprises a portion of the removable cover (410) secured to the piston chamber forming member (12).

7. A pump as claimed in one of the claims 2-6 wherein the cover (410) comprises a plurality of arm members disposed at different circumferentially spaced locations about the outer end of the piston chamber forming member (12) relative the piston forming element (16) and supporting the plug member (420) axially aligned with the outlet (54) with openings (426) through the cover (410) between the arm members.

8. A pump as claimed in one of the claims 2-7 wherein the piston chamber forming member (12) including the cover (410) is formed as an integral member by injection molding.

9. A pump as claimed in any preceding claim wherein in normal pumping operation, the piston forming element (16) is reciprocally moved within the piston chamber forming member (12) between an inward position remote from the outer end and an outward position remote from the inner end,
said initial position of the piston forming element (16) being spaced towards the inner end from the inward position whereby in the first movement of the piston forming element (16) from the initial position to the inward position, the cutting element (406) engages the membrane (402) and breaks the membrane (402).

10. A pump as claimed in any preceding claim wherein the piston chamber forming member (12) having a stepped configuration with a larger end of the chamber open to the inner end and a smaller end of the chamber open to the outer end.

## Patentansprüche

1. Eine Flüssigkeitspumpe (10) zur Entnahme von Flüssigkeiten aus einem Reservoir (26), enthaltend
ein kolbenkammerbildendes Element (12) mit einem inneren Ende und einem äußeren Ende,
wobei das kolbenkammerbildende Element (12) eine innere Kammer (204) und eine äußere Kammer (202) aufweist,
wobei die innere Kammer (204) und die äußere Kammer (202) koaxial sind und das äußere Ende der inneren Kammer (204) zu der inneren Ende der äußeren Kammer (202) hin offen ist,
wobei das innere Ende der inneren Kammer (204) in Flüssigkeitsverbindung mit dem Reservoir (26) steht,
wobei ein kolbenbildendes Element (16) in dem kolbenkammerbildenden Element (12) axial nach innen und außen beweglich aufgenommen ist, wobei eine nach innen und außen hin- und hergehende Bewegung des kolbenbildenden Elements (16) in dem kolbenkammerbildenden Element (12) Flüssigkeit durch das kolbenkammerbildende Element (12) von dem inneren Ende zu dem äußeren Ende pumpt,
wobei das innere Ende durch eine zerbrechliche Membran (402) geschlossen ist, welches, wenn nicht aufgebrochen, die Flüssigkeitsverbindung des inneren Ende mit dem Flüssigkeitsreservoir (26) trennt, und, wenn gebrochen, eine Flüssigkeitsverbindung des inneren Ende mit dem Flüssigkeitsreservoir (26) erlaubt,
ein an dem kolbenbildenden Element (16) vorgesehenes Schneidelement (406), welches sich axial nach innen in Richtung auf das innere Ende des kolbenkammerbildenden Elements (12) erstreckt,
wobei das kolbenbildende Element (16) in einer Ausgangsstellung in dem kolbenkammerbildenden Element (12) so vorgesehen ist, dass sich das Schneidelement (406) in dem kolbenkammerbildenden Element (12) in einem Abstand von der Membran (402) in Richtung auf das äußere Ende befindet, so dass das Schneidelement (406) mit der Membran (402) in Kontakt kommt und die Membran (402) durchschneidet, wenn das kolbenbildende Element (16) in Richtung auf die Membran (402) bewegt wird,
**gekennzeichnet durch**
ein entfernbares Abdeckteil (410) über das äußere Ende des kolbenkammerbildenden Elements (12), welches verhindert, dass das kolbenbildende Element (16) in dem kolbenkammerbildenden Element (12) für Bewegung innerhalb des kolbenkammerbildenden Elements zugänglich wird, bis das Abdeckteil (410) entfernt ist.

2. Eine Pumpe nach Anspruch l, bei welcher das entfembare Abdeckteil (410) das äußere Ende des kolbenkammerbildenden Elements (12) im wesentlichen abdichtet, wodurch das kolbenbildende Element (16) innerhalb des kolbenkammerbildenden Elements (12) gegen Verunreinigungen im wesentlichen abgedichtet wird.

3. Eine Pumpe nach Anspruch 2, bei welcher das Abdeckteil (410) einen Teil des kolbenkammerbildenden Elements (12) enthält und durch Durchbrechen einer brechbaren Verbindung (412) davon entfembar ist, durch welche das Abdeckteil damit verbunden ist.

4. Eine Pumpe nach Anspruch 1, 2 oder 3, bei welcher das kolbenkammerbildende Element (12) einen sich radial nach außen erstreckenden Flansch (400) um das innere Ende aufweist, welcher mit der besagten Membran (402) verbindbar ist.

5. Eine Pumpe nach einem der vorhergehenden Ansprüche, bei welcher das kolbenbildende Element (16) einen axial verlaufenden, hohlen Stiel (46) aufweist, welcher sich aus dem besagten äußeren Ende des kolbenkammerbildenden Elements (12) heraus erstreckt,
wobei der Stiel (46) einen zentralen Durchgang (52) aufweist, welcher an einem Auslaß (54) endet, aus welchem Flüssigkeit durch hin- und hergehende Bewegung des kolbenbildenden Elements (16) gepumpt wird, und
einen in dem Auslaß (54) entfembar vorgesehenen Stopfen (420) zum Abdichten des Durchgangs (52).

6. Eine Pumpe nach Anspruch 5, bei welcher der besagte Stopfen (420) ein an dem kolbenkammerbildenden Element (12) befestigtes Teil des entfembaren Abdeckteils (410) enthält.

7. Eine Pumpe nach einem der Ansprüche 2-6, bei welcher das Abdeckteil (410) eine Mehrzahl von Armgliedern aufweist, welche um das äußere Ende des kolbenkammerbildenden Elements (12) an verschiedenen, umfangsmäßig im Abstand von einander vorgesehenen Stellen relativ zu dem kolbenbildenden Element (16) vorgesehen sind und den Stopfen (420) mit dem Auslaß (54) axial fluchtend halten, wobei Öffnungen (426) durch das Abdeckteil (410) zwischen den Armgliedern vorgesehen sind.

8. Eine Pumpe nach einem der Ansprüche 2-7, bei welcher das kolbenkammerbildende Element (12) mit dem Abdeckteil (410) als einstückiges Teil durch Spritzen hergestellt ist.

9. Eine Pumpe nach einem der vorhergehenden Ansprüche, bei welcher das kolbenbildende Element (16) beim normalen Pumpvorgang in dem kolbenkammerbildenden Element (12) zwischen einer inneren, von dem äußeren Ende entfernten Stellung und einer äußeren, von dem inneren Ende entfernten Stellung hin- und herbewegt wird,
wobei die besagte Ausgangsstellung des kolbenbildenden Elements (16) sich in einem Abstand von der inneren Stellung zu dem inneren Ende hin befindet, wobei das Schneidelement (406) bei der ersten Bewegung des kolbenbildenden Elements (16) von der Ausgangsstellung zu der inneren Stellung mit der Membran (402) in Kontakt kommt und die Membran (402) durchschneidet.

10. Eine Pumpe nach einem der vorhergehenden Ansprüche, bei welcher das kolbenkammerbildende Element (12) eine gestufte Konfiguration aufweist, wobei ein größeres Ende der Kammer zu dem inneren Ende hin offen ist und ein kleineres Ende der Kammer zu dem äußeren Ende hin offen ist.

## Revendications

1. Pompe à liquide (10) destinée à distribuer des liquides venant d'un réservoir (26), comprenant
un membre formant une chambre de piston (12) muni d'une extrémité intérieure et d'une extrémité extérieure,
le membre formant la chambre de piston (12) présentant une chambre intérieure (204) et une chambre extérieure (202),
la chambre intérieure (204) et la chambre extérieure (202) étant coaxiales, et l'extrémité extérieure de la chambre intérieure (204) débouchant dans l'extrémité intérieure de la chambre extérieure (202),
l'extrémité intérieure de la chambre intérieure (204) communiquant du point de vue du liquide avec le réservoir (26),
un élément formant le piston (16) étant logé dans le membre formant la chambre le piston (12) de façon susceptible de glisser axialement à l'intérieur et à l'extérieur, le glissement de va-et-vient à l'intérieur et à l'extérieur de l'élément formant le piston (16) dans le membre formant la chambre de piston (12) pompant le liquide à travers le membre formant la chambre de piston (12) depuis l'extrémité intérieure vers l'extrémité extérieure,
l'extrémité intérieure étant fermée par une membrane fragile (402) qui, quand elle n'est pas rompue, empêche le liquide de communiquer depuis l'extrémité intérieure avec le réservoir (26) de liquide et, quand elle est rompue, permet au liquide de communiquer depuis l'extrémité intérieure avec le réservoir (26) de liquide,
un élément de découpage (406) prévu sur l'élément formant le piston (16) et s'étendant axialement à l'intérieur en direction de l'extrémité intérieure du membre formant la chambre de piston (12),
l'élément formant le piston (16) étant prévu dans le membre formant la chambre de piston (12) en position initiale de sorte que l'élément de découpage (406) se trouve dans le membre formant la chambre de piston (12) en étant espacé de la membrane (402) en direction de l'extrémité extérieure de sorte que, lorsque l'élément formant le piston (16) glisse axialement en direction de la membrane (402), l'élément de découpage (406) engage la membrane (402) et rompt la membrane (402),
**caractérisée par**
un membre de recouvrement susceptible d'être enlevé (410) placé sur l'extrémité extérieure du membre formant la chambre de piston (12) confinant l'élément formant le piston (16) à l'intérieur du membre formant la chambre de piston (12) afin de l'empêcher de se déplacer à l'intérieur du membre formant la chambre de piston (12) jusqu'à ce que le membre de recouvrement (410) soit enlevé.

2. Pompe selon la revendication 1, pour laquelle le membre de recouvrement susceptible d'être enlevé (410) scelle sensiblement l'extrémité extérieure du membre formant la chambre de piston (12), l'élément formant le piston (16) étant sensiblement protégé hermétiquement contre toute impureté à l'intérieur du membre formant la chambre de piston (12).

3. Pompe selon la revendication 2, pour laquelle le membre de recouvrement (410) comprend une partie complète du membre formant la chambre de piston (12) et qu'il est susceptible d'être enlevé de là en rompant une jonction fragile (412) joignant le membre de recouvrement à celui-ci.

4. Pompe selon la revendication 1, 2 ou 3, pour laquelle le membre formant la chambre de piston (12) comprend une bride (400) s'étendant radialement à l'extérieur et entourant l'extrémité intérieure de sorte à faire la liaison avec ladite membrane (402).

5. Pompe selon l'une quelconque des revendications précédentes, pour laquelle l'élément formant le piston (16) présente une tige creuse (46) s'étendant axialement et sortant de ladite extrémité extérieure du membre formant la chambre de piston (12),
la tige (46) présentant un passage central (52) se terminant par une sortie (54) par laquelle le liquide est pompé grâce au déplacement de va-et-vient de l'élément formant un piston (16), et
un membre obturateur (420) logé dans la sortie (54) de façon susceptible d'être enlevé afin de fermer hermétiquement le passage (52).

6. Pompe selon la revendications 5, pour laquelle ledit membre obturateur (420) comprend une partie du recouvrement susceptible d'être enlevé (410) fixée au membre formant la chambre de piston (12).

7. Pompe selon l'une quelconque des revendications 2-6, pour laquelle le recouvrement (410) comprend plusieurs membres à bras disposés à différents endroits espacés sur la circonférence de l'extrémité extérieure du membre formant la chambre de piston (12) par rapport à l'élément formant le piston (16) et maintenant le membre obturateur (420) aligné sur l'axe de la sortie (54), des ouvertures (426) traversant le recouvrement (410) étant prévues entre les membres à bras.

8. Pompe selon l'une quelconque des revendications 2-7, pour laquelle le membre formant la chambre de piston (12) comprenant le recouvrement (410) est réalisé en une seule pièce moulée par injection.

9. Pompe selon l'une quelconque des revendications précédentes, pour laquelle, en pompage normal, l'élément formant le piston (16) est déplacé en va-et-vient à l'intérieur du membre formant la chambre de piston (12) entre une position intérieure éloignée de l'extrémité extérieure et une position extérieure éloignée de l'extrémité intérieure,
ladite position initiale de l'élément formant le piston (16) se trouvant espacée de la position intérieure en direction de l'extrémité intérieure, l'élément de découpage (406) engageant la membrane (402) et rompant la membrane (402) lorsque l'élément formant le piston (16) se déplace en premier de la position initiale en position intérieure.

10. Pompe selon - l'une quelconque des revendications précédentes, pour laquelle le membre formant la chambre de piston (12) présente une configuration en étages, l'extrémité plus importante de la chambre étant ouverte en direction de l'extrémité intérieure et l'extrémité plus petite de la chambre étant ouverte en direction de l'extrémité extérieure.
